# EUROPEAN PATENT SPECIFICATION

(11) **EP 2 300 692 B1**
(45) Date of publication and mention of the grant of the patent: **16.11.2011**
(21) Application number: 09735086.2
(22) Date of filing: 21.04.2009
(51) Int. Cl.: F01K 7/24, F01K 7/38

(54) **OXYFUEL COMBUSTING BOILER SYSTEM AND A METHOD OF GENERATING POWER BY USING THE BOILER SYSTEM**
OXYFUEL-VERBRENNUNGSKESSELSYSTEM UND VERFAHREN ZUR ERZEUGUNG VON ENERGIE DURCH VERWENDUNG DES KESSELSYSTEMS
SYSTÈME DE CHAUDIÈRE À COMBUSTION OXY-GAZ ET PROCÉDÉ DE GÉNÉRATION D ÉNERGIE À L AIDE DU SYSTÈME DE CHAUDIÈRE

(30) Priority: 22.04.2008 US 107198
(43) Date of publication of application: 30.03.2011
(73) Proprietor: Foster Wheeler Energy Corporation, Clinton, New Jersey 08809-4000 (US)
(72) Inventor: HACK, Horst, Hampton New Jersey 08827 (US); SELTZER, Andrew, Livingston New Jersey 07039-2439 (US); FAN, Zhen, Parsippany New Jersey 07054 (US); ROBERTSON, Archibald, Whitehouse Station New Jersey 08889-3901 (US); ERIKSSON, Timo, FI-78300 Varkaus (FI); SIPPU, Ossi, FI-78500 Varkaus (FI)
(74) Representative: Salonen, Kauko Tuomas
(86) International application number: PCT/IB2009/051624
(87) International publication number: WO 2009/130660

(56) References cited:
- EP-A2- 1 473 442
- WO-A2-2006/131283
- DE-C1- 4 447 044
- US-A- 2 980 082
- US-B1- 6 898 936

## Description

### BACKGROUND OF THE INVENTION

Field of the Invention

The present invention relates to an oxyfuel combusting boiler system and a method of generating power by using the boiler system The invention relates especially to a dual-firing boiler system, i.e., a boiler system which can be operated by using either air or a mixture of substantially pure oxygen and recycled exhaust gas as the oxidant gas, i.e., as the oxygen carrier gas.

Description of the Related Art

Oxyfuel combustion is one of the methods suggested for removing CO₂ from the exhaust gases of a power generating boiler, such as a pulverized coal (PC) boiler or a circulating fluidized bed (CFB) boiler. Oxyfuel combustion is based on combusting carbonaceous fuel with substantially pure oxygen, typically, of about 95% purity, so as to have carbon dioxide and water as the main components of the exhaust gas discharged from the boiler. Thereby, the carbon dioxide can be captured relatively easily from the exhaust gas, without having to separate it from a gas stream having nitrogen as its main component, as when combusting the fuel with air.

Generating power by oxyfuel combustion is more complicated than conventional combustion by air, because of the need of an oxygen supply, for example, a cryogenic or membrane based air separation unit (ASU), where oxygen is separated from other components of air, mainly, nitrogen. The produced exhaust gas is then ready for sequestration of CO₂ when water is removed therefrom and, possibly, the exhaust gas is purified in order to reduce inert gases originating from the oxidant, fuel or air-leakage. This purification is typically done by CO₂ condensation at a low temperature and/or a high pressure. CO₂ can be separated from the exhaust gas, for example, by cooling to a relatively low temperature, while compressing it to a pressure greater than 110 bar. Both the production of oxygen and the compression and purification of carbon dioxide increase the total production costs of the power generation process, for example, by decreasing the net power produced in the process.

Combustion using oxygen differs from combustion using air, mainly by having a higher combustion temperature and a smaller combustion volume. Because oxyfuel combustion is still a developing technology, it is considered to be advantageous to design so-called first generation oxyfuel combustion boilers, where the combustion conditions are arranged to be close to those of air-firing combustion. This can be done by recycling exhaust gas back to the furnace, so as to provide an average O₂ content of the oxidant of, for example, 20-28%. Such first-generation oxyfuel combustion boilers can advantageously be built by modifying existing air-firing boilers. Due to many uncertainties related to oxyfuel combustion with capture and storage of carbon dioxide, there is also a need for dual-firing boilers, i.e., boilers which can be changed from air-firing to oxyfuel combustion and back, as easily as possible, and preferably, without any changes in the actual construction. With such a dual-firing boiler, it is also possible to have a maximum power output, by using air-firing combustion, during high load demand, such as in the summer or during the daytime, and to apply oxyfuel combustion with CO₂ removal in other conditions. Also, it is possible to use a dual-firing boiler in an air-firing mode, for example, when the air separation unit or CO₂ sequestration unit is out of order.

U.S. Patent No. 6,418,865 discloses a boiler for combusting fuel with oxygen-enriched air, which boiler can be made by retrofitting an air-firing boiler, wherein flue gas is re-circulated to the furnace so as to have a flame temperature and total mass flow approximately the same as that for combustion with air.

Patent publication number WO 2006/131283 discloses a retrofitted dual firing boiler, where fresh air exiting an air heater is either conveyed directly, in the air-firing mode, to the combustion chamber, or it is, in the oxyfuel combustion mode, cooled by feedwater of the boiler, compressed by utilizing steam extracted from a high pressure steam turbine and conveyed to an air separator unit for producing oxygen. The net power generated in the CO₂ capturing oxyfuel combustion mode of the process disclosed in WO 2006/131283 is considerably reduced from that of the air-firing mode.
Patent publication number EP-1473442 discloses a boiler system comprising means for extracting a first portion of steam from a high pressure steam turbine for preheating a feedmater, and means for conveying a second portion of steam from said high presure steam turbine to reheating heat exchange surfaces.

In order to more economically generate power by an oxyfuel combusting boiler system, there is a need for an improved method and boiler system for minimizing the loss of produced power, especially, in a dual-firing boiler.

### SUMMARY OF THE INVENTION

An object of the present invention is to provide an oxyfuel combusting boiler system and a method of using the boiler system, so as to minimize the loss of produced power.

In one aspect, the present invention provides a method of generating power by combusting carbonaceous fuel with an oxidant gas in a furnace of a boiler system, the method comprising the steps of feeding carbonaceous fuel into the furnace at a fuel feeding rate, feeding oxidant gas into the furnace for combusting the fuel to produce exhaust gas, discharging the exhaust gas from the furnace via an exhaust gas channel, conveying a stream of feedwater at a feedwater conveying rate from a final economizer arranged in the exhaust gas channel to evaporating and superheating heat exchange surfaces arranged in the furnace and in the exhaust gas channel, for converting the feedwater to superheated steam, expanding the superheated steam in a high-pressure steam turbine for generating power, extracting a first portion of steam from the high-pressure steam turbine for preheating the feedwater, conveying a second portion of steam from the high-pressure steam turbine to reheating heat exchange surfaces arranged in the exhaust gas channel for generating reheated steam, and expanding the reheated steam in an intermediate-pressure steam turbine for generating power, wherein, in first operating conditions, the oxidant gas is a mixture of substantially pure oxygen and recycled exhaust gas, and the ratio of the first and second portions of steam is controlled so as to obtain a desired flue gas temperature in the exhaust gas channel downstream of the final economizer.

In another aspect, the present invention provides a boiler system for generating power by combusting carbonaceous fuel in a furnace of the boiler system, the boiler system comprising means for feeding carbonaceous fuel into the furnace, means for feeding substantially pure oxygen and recycled exhaust gas as an oxidant gas into the furnace for combusting the fuel to produce exhaust gas, an exhaust gas channel for discharging the exhaust gas from the furnace, means for conveying a stream of feedwater from a final economizer arranged in the exhaust gas channel to evaporating and superheating heat exchange surfaces arranged in the furnace and in the exhaust gas channel, for converting the feedwater to superheated steam, a high-pressure steam turbine for expanding the superheated steam for generating power, means for extracting a first portion of steam from the high-pressure steam turbine for preheating the feedwater, means for conveying a second portion of steam from the high-pressure steam turbine to reheating heat exchange surfaces arranged in the exhaust gas channel for generating reheated steam, an intermediate-pressure steam turbine for expanding the reheated steam for generating power, and means for controlling the ratio of the first and second portions of steam, so as to obtain a desired flue gas temperature in the exhaust gas channel downstream of the final economizer.

The decreasing amount of steam extracted from the high-pressure steam turbine for preheating the feedwater naturally lowers the temperature of the feedwater entering a final economizer in the exhaust gas channel. Thus, the decreasing of this steam extraction increases the temperature difference between the feedwater and the exhaust gas in the final economizer. Thereby, the decreasing of the steam extraction indirectly increases the rate of heat exchange taking place in the final economizer. Correspondingly, the increasing of the amount of steam conveyed from the high-pressure steam turbine to the reheating heat exchange surfaces increases the heat exchange rate taking place at the reheating surfaces. In some cases, it may be useful to increase the heat transfer area of the reheating surfaces in order to obtain the desired, increased heat transfer rate. Both of the above-described measures enhances the cooling of the exhaust gas in the exhaust gas channel, and together, they provide an especially efficient method for controlling the temperature of the exhaust gas.

When using the present invention, the fuel feeding rate and the feedwater conveying rate are advantageously adjusted so as to obtain a desired furnace temperature. This, together with the above-discussed method for controlling the temperature of the exhaust gas, provides an efficient method of adjusting the temperature profile of an oxyfuel combustion boiler retrofitted from an air-firing boiler, to be nearly the same as that of the air-firing combustion, and to avoid, e.g., corrosion or material strength problems of the boiler walls. According to an advantageous embodiment of the present invention, the fuel feeding rate at full load is when modifying an air-firing boiler for oxyfuel combustion, increased by 20% and, correspondingly, the feedwater conveying rate is at the same time increased by 10%. Thus, as a consequence of the method of the present invention, due to the higher firing rate, more energy can be released from the fuel when using oxyfuel combustion, and thereby, the net power loss, caused by the oxycombustion process as a whole, is minimized.

According to an especially advantageous embodiment of the present invention, the oxyfuel combustion boiler is a dual-firing boiler, i.e., an oxyfuel combusting boiler, which can, in special operating conditions, for example, when the oxygen supply is not operational, be used for combustion with air. When comparing the combustion, at full load, in normal operating conditions, i.e., in the so-called first operation conditions, with a mixture of oxygen and recycled exhaust gas as the oxidant, to that in the so-called second operation conditions, by using air as the oxidant, the fuel feeding rate in the first operating conditions is advantageously higher than that in the second operating conditions. The fuel feeding rate in oxyfuel combustion is preferably at least 10% higher, even more preferably, at least 15% higher, than that in the air-firing combustion. Due to the higher fuel feeding rate, the total firing rate of the boiler is increased, and the loss of produced power is minimized.

The use of an increased fuel feeing rate in the oxyfuel combustion, while still maintaining the furnace temperature, is advantageously partly based on the increased heat exchange in the evaporation surfaces, due to decreased temperature, and possibly, also increased flow rate, of the feedwater. As discussed above, the feedwater temperature can advantageously be lowered, especially before the final economizer, but to some extent, also after the final economizer, in oxyfuel combustion, by decreasing the extraction of steam for preheating the feedwater from that in air-firing combustion.

The furnace temperature is naturally, also to a large extent, determined by the exhaust gas cycling rate, which affects both the rate of feeding relatively cold inlet gas to the furnace and the rate of convective heat flow, by the exhaust gas, from the furnace. The exhaust gas recycling rate may, in the oxyfuel combustion mode, advantageously be determined such that the average oxygen content, by volume, of the oxidant gas is at a desired level, typically, from about 18% to about 28%. The exhaust gas recycling rate in the oxyfuel combustion mode may alternatively be determined so as to maintain a desired gas flow velocity, usually, the same as that in air-firing combustion, in the furnace.

The increased convective heat flow from the furnace is partially based on the fact that the mass and heat capacity of the exhaust gas of oxyfuel combustion, having carbon dioxide as its main component, are larger than those of the exhaust gas of air-firing combustion, having nitrogen as its main component. The high heat flow brings about that the exhaust gas carries an increased amount of heat to the exhaust gas channel, where the heat is advantageously recovered by an increased heat exchange rate in the reheating surfaces and the final economizer, as discussed above.

According to a preferred embodiment of the present invention, the system comprises a gas-gas heat exchanger, where heat is transferred from the exhaust gas in the exhaust gas channel to at least a portion of the oxidant gas. Thus, the same gas-gas heat exchanger is advantageously used in air-firing combustion to transfer heat from the exhaust gas to the combustion air, and in oxyfuel combustion to transfer heat from the exhaust gas to at least a portion of the oxidant gas.

As is common in oxyfuel combustion, the substantially pure oxygen is advantageously produced in an air separation unit (ASU), for example, a cryogenic or membrane based air separation unit. Correspondingly, a portion of the exhaust gas is advantageously cooled and pressurized in multiple exhaust gas compressors, so as to sequestrate liquid or supercritical carbon dioxide. Due to this auxiliary equipment, the net power produced by an oxyfuel combusting boiler tends to be considerably less than that of a corresponding air-firing boiler. According to an advantageous embodiment of the present invention, at least a portion of the exhaust compressors is directly driven by mechanical energy of auxiliary steam turbines using steam extracted from the steam turbine system. This steam is advantageously generated by firing more and saved from reducing the extraction of steam used for feedwater heating. Thus, the need for auxiliary power for the compression of carbon dioxide is minimized. Correspondingly, in a case in which the oxygen supply comprises a cryogenic air separation unit having compressors for pressurizing air, one or more of these compressors can also be driven directly by the auxiliary steam turbines, so as to further decrease the need for auxiliary power.

According to the present invention, the substantially pure oxygen and recycled exhaust gas can be fed to the boiler as separate streams, or as a mixture of the two streams. It is also possible to feed to the boiler multiple streams, which can be identical mixture streams, or streams having different temperatures or compositions. The multiple streams can naturally have different purposes in the furnace, such as primary, secondary and overfire gas streams of a PC boiler, or streams of fluidizing gas and secondary gas of a CFB boiler.

The feeding rate of oxygen is always, in practice, determined on the basis of the fuel feeding rate, so as to provide sufficiently complete combustion of the fuel. Usually, the oxygen feeding rate is controlled by monitoring the content of residual oxygen in the exhaust gas, which should stay at a suitable level, typically, about 3%.

An advantage of an oxycombustion power generation process in accordance with the present invention is that it can be taken to use relatively easily, by retrofitting an conventional air-firing boiler, such as a PC boiler or a CFB boiler. Advantageously, the modification mainly comprises the implementation of an oxygen supply, such as a cryogenic air separation unit, equipment for carbon dioxide sequestration, means for extensive exhaust gas recycling and means for controlling the ratio of the steam flows from the high-pressure steam turbine to the feedwater preheaters and reheater surfaces. In some cases, the modification may also require the use of updated steam turbines and a steam condenser, as well as increased heat exchange surfaces in the upstream portion of the exhaust gas channel. When controlling the temperatures in the boiler, as discussed above, the same combustion system can be used in oxyfuel combustion and in air-firing combustion, thus enabling the use of the system as a dual-firing steam generator.

The above brief description, as well as other objects, features, and advantages of the present invention will be more fully appreciated by preference to the following detailed description of the currently preferred, but nonetheless illustrative, embodiment of the present invention, taken in conjunction with the accompanying drawing.

### BRIEF DESCRIPTION OF THE DRAWING

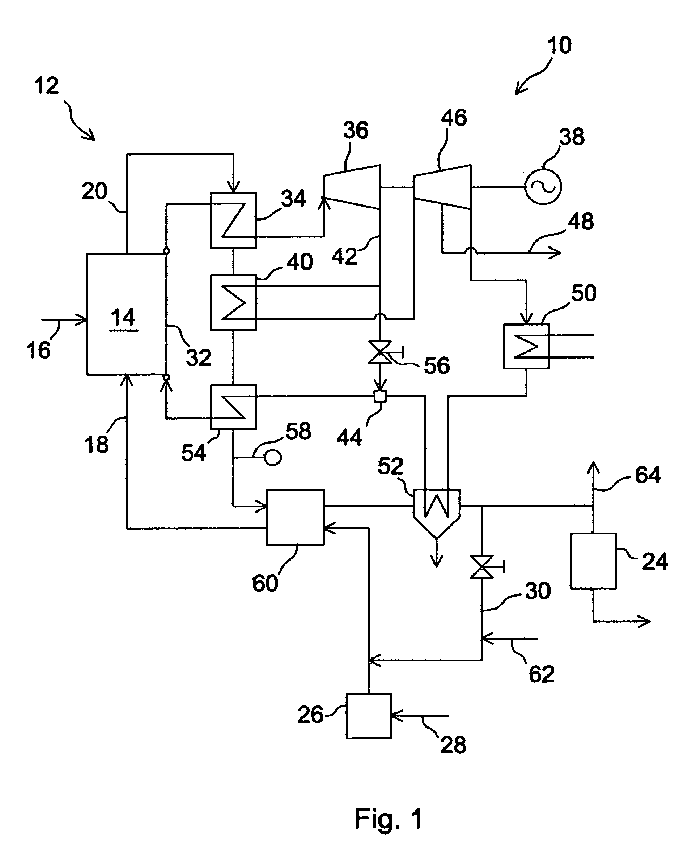

FIG. 1 is a schematic diagram of an oxy-fuel combusting power plant in accordance with the present invention.

### DETAILED DESCRIPTION OF THE INVENTION

FIG. 1 shows a schematic diagram of an oxycombustion boiler system 10 in accordance with a preferred embodiment of the present invention. The boiler system 10 comprises a boiler 12, which may be, for example, a pulverized coal (PC) boiler or a circulating fluidized bed (CFB) boiler. The boiler 12 comprises conventional fuel feeding means 16, such as a fuel supply pipe means for introducing oxidant gas into the furnace 14 of the boiler, such as a gas supply line 18, and an exhaust gas channel 20 for discharging exhaust gas produced by combusting the fuel with the oxygen of the oxidant gas. The details and types of some elements of the boiler 12, such as the fuel feeding means 16 and oxidant gas feeding means 18, depend, naturally, on the type of the boiler. Such details, for example, burners, coal mills, means for separately feeding primary and secondary oxidant gas, are, however, not important for the present invention, and they are thus not shown in FIG. 1.

The oxycombustion boiler system 10 is advantageously retrofitted from an existing air-firing boiler, mainly by adding equipment 24 for purifying and sequestering carbon dioxide from the exhaust gas, and an oxygen supply 26, such as a cryogenic or membrane-based air separation unit (ASU), for producing substantially pure oxygen from an air stream 28. Because combustion with pure oxygen tends to create combustion temperatures which are too high for the construction of an air-firing boiler, the boiler system 10 is preferably designed so as to maintain the temperature profiles in the furnace and the exhaust gas channel to be close to those of an original air firing boiler. Most preferably, the boiler system 10 is designed as a dual-firing boiler, i.e., a boiler which can be easily switched between oxyfuel combustions and air-firing combustion. At the same time, the system is designed so as to have the loss of produced net power in the oxycombustion mode be as low as possible.

According to the present invention, the oxidant gas, introduced from gas supply line 18 into the furnace 14, is in normal operating conditions, so-called first operating conditions, and includes a mixture of substantially pure oxygen and a portion of cooled exhaust gas, which is recycled via an exhaust gas recycling channel 30. The exhaust gas recycling channel 30 advantageously comprises means, such as a fan (not shown in FIG. 1), for controlling the exhaust gas recycling rate. The recycling rate of the exhaust gas is advantageously adjusted such that the average oxygen content of the oxidant gas is close to that of air, preferably, from 18% to 28%. In some applications of the present invention, it is also possible to introduce the streams of recycled exhaust gas and substantially pure oxygen, or different oxidant gas compositions, separately, into the furnace 14, for example, in different portions of the furnace.

The walls of the furnace 14 are preferably formed as a tube-wall construction, which forms an evaporating heat transfer surface 32, for converting preheated feedwater to steam. The high temperature portions of the boiler 12, especially, the upstream end of the exhaust gas channel 20, comprise superheating heat transfer surfaces 34 for recovering heat from the exhaust gas to produce superheated steam to be conveyed to the inlet of a high-pressure steam turbine 36 for generating power in a generator 38. Expanded steam in line 42 is conveyed from the outlet side of the high-pressure steam turbine 36 to reheating heat transfer surfaces 40 for recovering further heat from the exhaust gas. For some cases, primary superheating and reheating surfaces may be located in the exhaust gas channel 20 and additional finishing superheating and reheating surfaces, for example in the furnace 14.

Another portion of steam from the high-pressure turbine 36 may be converted through line 42 to a feedwater heater 44. Reheated steam is conveyed from the reheating heat exchange surfaces 40 the feedwater heater 44 to the inlet of an intermediate-pressure steam turbine 46 for generating power. The intermediate-pressure steam turbine 46 may comprise a line 48 for extracting steam from the steam turbine 46 for other purposes, advantageously, for generating mechanical power in an auxiliary steam turbine for driving compressors in the air separation unit 26 or carbon dioxide purification and sequestration unit 24. In practice, the steam turbine system also usually comprises at least a low-pressure steam turbine, which is, however, not shown in FIG. 1. There may also be more feedwater heaters than the single feedwater heater 44 shown in FIG. 1.

The steam cycle of the boiler 12 comprises, in a conventional manner, a condenser 50 downstream of the intermediate-pressure steam turbine 46. The condensed steam, i.e., feedwater of the next steam cycle, is conducted from the condenser 50 for preheating in an economizer system typically comprising at least a first economizer 52 and a final economizer 54, to be again converted to steam in the evaporation surfaces 32. Additional feedwater heating may be performed in the feedwater heater 40 by steam extracted from the high-pressure steam turbine 36.

According to the present invention, the exhaust gas temperature is controlled in oxyfuel combustion by adjusting the rate of extracting intermediate-pressure steam from the high-pressure steam turbine 36 to the feedwater preheater 44, by means 56, such as a regulation valve, arranged in the steam line 42. When this rate is decreased, the temperature of the feedwater entering the final economizer 54 is lowered, and the rate of heat exchange taking place in the final economizer 54 increases. At the same time, a higher portion of steam remains to be conveyed to the reheating heat transfer surfaces 40, which increases the rate of heat exchange taking place in the final economizer 54. At the same time, a higher portion of steam remains to be conveyed to the reheating heat transfer surfaces 40, which increases the rate of heat exchange taking place at the reheating heat exchange surfaces 40. Thus, both of these effects increase the cooling of the exhaust gas, and, thereby, they can be used to efficiently control the exhaust gas temperature. The controlling of the exhaust gas temperature may advantageously be based on measuring the temperature of the exhaust gas downstream of the final economizer 54 by a thermometer 58.

According to the present invention, the loss of produced net power is minimized by arranging the conditions such that more fuel can be fired while still maintaining the temperatures in the furnace 14 and in the exhaust gas channel 20. The temperature in the furnace 14 can be maintained by adjusting the exhaust gas recycling rate to a suitable level and by controlling the temperature and flow rate of the feedwater. When the exhaust gas recycling rate is adjusted such that the volume flow of gas in the furnace 14 remains at a desired level, the temperature in the furnace 14 can typically still be adjusted to its desired level by the measures discussed above. Due to the increased mass flow and high heat capacity of the exhaust gas, consisting mainly of carbon dioxide, the convective heat, carried by the exhaust gas, is increased, even if the temperature in the furnace 14 is unchanged. This additional heat can then be recovered by decreasing the extraction of steam for feedwater preheating, by the means 56, and increasing the reheating rate, as discussed above, as well as by increasing feedwater flow due to increased main steam generation.

A recuperative or regenerative gas-gas heat exchanger 60 is advantageously arranged in the exhaust gas channel, downstream of the final economizer 54. A gas-gas heat exchanger 60 can be of a recuperative or regenerative type, for transferring heat from the exhaust gas to the oxidant gas of the boiler 12. The exhaust gas channel 20 also usually comprises different units for cleaning the exhaust gas from particles and gaseous pollutants, but because they are not important for the present invention, such units are not shown in FIG. 1.

In accordance with the main object of oxyfuel combustion, i.e., to recover carbon dioxide from the exhaust gas, the end portion of the exhaust gas channel 20 is equipped with means 24, such as a separator, to produce liquid or supercritical carbon dioxide, typically, at a pressure of about 110 bar, so that it can be transported for further use or to be stored in a suitable place. The carbon dioxide purification and sequestration system also usually comprises means for completely drying all water from the exhaust gas, and means for separating oxygen, and other possible impurities, from the carbon dioxide, which are, however, not shown in FIG. 1. Such means for drying and means for separating are individually known in the art.

The water content of the recycled exhaust gas is advantageously lowered before the exhaust gas is recycled to the furnace 14. Therefore, the exhaust gas recycling line 30 is advantageously branched off from the exhaust gas channel 20 downstream of the first economizer 52, which functions as a condensing cooler of the exhaust gas. Thereby, the water content of the recycled gas is reduced, also causing a reduction of the water content in the furnace 14 and in the exhaust gas discharged from the furnace 14. Because the O₂ content of the exhaust gas has to be maintained at a suitable level, at about 3% by volume, in order to guarantee sufficiently complete combustion of the fuel, the reducing of the water content reduces the O₂/CO₂ ratio in the exhaust gas. Alternatively, the condensing cooler can be downstream of the branch point of the recycled exhaust gas.

Because of the efficient methods for controlling the temperatures in the furnace 14 and in the exhaust gas channel 20, as described above, the oxyfuel combustion system shown in FIG. 1 can be constructed relatively easily by retrofitting an existing air-firing boiler. For the same reasons, the boiler system can also be used as a dual firing boiler, which can be switched between oxyfuel combustion and air-firing combustion, without any physical modification of the system. This is achieved by arranging means 62, such as an air inlet supply line, for introducing fresh air as the oxidant gas, to replace the mixture of oxygen and recycled exhaust gas, and a stack 64 for releasing the exhaust gas to the environment. Advantageously, air inlet 62 is arranged in the recycling gas channel 30, in such a way that the gas-gas heater 60 can be used alternatively as an air heater. In an air-firing combustion mode, the temperature profiles in the furnace 14 and in the exhaust channel 20 can be adjusted to their desired values by adjusting the fuel feeding rate and steam reheating rate to suitable values, by using the principles discussed above.

While the invention has been described herein by way of examples in connection with what are, at present, considered to be the most preferred embodiments, it is to be understood that the invention is not limited to the disclosed embodiments, but is intended to cover various combinations or modifications of its features and several other applications included within the scope of the invention as defined in the appended claims.

## Claims

1. A method of generating power by combusting carbonaceous fuel with an oxidant gas in a furnace (14) of a boiler system (10), the method comprising the steps of:
(a) feeding carbonaceous fuel (16) into the furnace at a fuel feeding rate;
(b) feeding oxidant gas (18) into the furnace for combusting the fuel to produce exhaust gas;
(c) discharging the exhaust gas from the furnace via an exhaust gas channel (20);
(d) conveying a stream of feedwater at a feedwater conveying rate from a final economizer (54) arranged in the exhaust gas channel to evaporating (32) and superheating (34) heat exchange surfaces arranged in the furnace and in the exhaust gas channel for converting the feedwater to superheated steam;
(e) expanding the superheated steam in a high-pressure steam turbine (36) for generating power,
(f) extracting a first portion of steam from the high-pressure steam turbine for preheating the feedwater,
(g) conveying a second portion of steam from the high-pressure steam turbine to reheating heat exchange surfaces arranged in the exhaust gas channel for generating reheated steam; and
(h) expanding the reheated steam in an intermediate pressure steam turbine (46) for generating power,
wherein, in first operating conditions, the oxidant gas is a mixture of substantially pure oxygen and recycled exhaust gas, **characterized in that** the ratio of the first and second portions of steam is controlled so as to obtain a desired flue gas temperature in the exhaust gas channel downstream of the final economizer.

2. The method according to claim 1, **characterized in that** the fuel feeding rate and the feedwater conveying rate are adjusted so as to obtain a desired furnace temperature.

3. The method according to claim 2, **characterized in that**, in second operating conditions, the oxidant gas is air and, when operating the combustion system at full load at the first and second operating conditions, the fuel feeding rate is, in the first operating conditions, higher than that in the second operating conditions.

4. The method according to claim 3, **characterized in that**, when operating the combustion system at full load of the first and second operating conditions, the first portion of steam in the first operating conditions is less than that in the second operating conditions, and the second portion of steam is, in the first operating conditions, greater than that in the second operating conditions.

5. The method according to claim 3, **characterized in that** the system comprises a gas-gas heat exchanger (60) and heat is transferred in the gas-gas heat exchanger in the first and second operating conditions from the exhaust gas in the exhaust gas channel to at least a portion of the oxidant gas.

6. The method according to claim 1, **characterized in that** the controlling comprises measuring the exhaust gas temperature (58).

7. The method according to claim 3, **characterized in that** the feedwater conveying rate is greater in the first operating conditions than that in the second operating conditions.

8. The method according to claim 1, **characterized in that** the method comprises, in the first operating conditions, a further step of pressurizing a portion of the exhaust gas in multiple exhaust gas compressors so as to produce liquid or supercritical carbon dioxide.

9. The method according to claim 1, **characterized in that** the method comprises, in the first operating conditions, a further step of extracting a portion of steam (48) from the intermediate-pressure steam turbine (46) for driving a-compressor.

10. A boiler system (10) for generating power by combusting carbonaceous fuel in a furnace (14) of the boiler system, the boiler system comprising:
means for feeding carbonaceous fuel (16) into the furnace;
means for feeding substantially pure oxygen and recycled exhaust gas (18) as an oxidant gas into the furnace for combusting the fuel to produce exhaust gas;
an exhaust gas channel (20) for discharging the exhaust gas from the furnace;
means for conveying a stream of feedwater from a final economizer (54) arranged in the exhaust gas channel to evaporating (32) and superheating (34) heat exchange surfaces arranged in the furnace and in the exhaust gas channel for converting the feedwater to be superheated steam;
a high-pressure steam turbine (36) for expanding the superheated steam for generating power;
means for extracting a first portion of steam from the high-pressure steam turbine for preheating the feedwater;
means for conveying a second portion of steam from the high-pressure steam turbine to reheating heat exchange surfaces arranged in the exhaust gas channel for generating reheated steam; and
an intermediate-pressure steam turbine (46) for expanding the reheated steam for generating power, **characterized in that** the boiler system comprises
means for controlling the ratio of the first and second portions of steam (56) so as to obtain a desired flue gas temperature in the exhaust gas channel downstream of the final economizer.

11. The boiler system according to claim 10, **characterized in that** the boiler system comprises means for feeding air (62) as an oxidant gas into the furnace for combusting the fuel to produce exhaust gas.

12. The boiler system according to claim 10, **characterized in that** the boiler system comprises a gas-gas heater exchanger (60) for transferring heat from the exhaust gas in the exhaust gas channel to at least a portion of the oxidant gas.

13. The boiler system according to claim 10, **characterized in that** the means for controlling comprise means for measuring the exhaust gas temperature (58).

14. The boiler system according to claim 10, **characterized in that** the boiler system comprises multiple exhaust gas compressors for pressurizing a portion of the exhaust gas so as to produce liquid or supercritical carbon dioxide.

15. The boiler system according to claim 10, **characterized in that** the boiler system comprises means for extracting a portion of steam (48) from the intermediate-pressure steam turbine (46) for driving a compressor.

## Patentansprüche

1. Verfahren zur Erzeugung von Energie durch Verbrennung von kohlenstoffhaltigem Brennstoff mit einem Oxidationsgas in einem Brennraum (14) eines Kesselsystems (10), welches Verfahren folgende Schritte umfasst:
(a) Aufgeben von kohlenstoffhaltigem Brennstoff (16) in den Brennraum mit einer Brennstoff-Aufgaberate;
(b) Aufgeben von Oxidationsgas (18) in den Brennraum zur Verbrennung des Brennstoffes, um Abgas zu produzieren;
(c) Ableiten des Abgases aus dem Brennraum durch einen Abgaskanal (20);
(d) Befördern eines Stroms von Speisewasser mit einer Speisewasser-Förderrate von einem im Abgaskanal angeordneten End-Economiser (54) auf evaporierende (32) und überhitzende (34) Wärmetauschflächen, die im Brennraum und im Abgaskanal zur Umwandlung des Speisewassers in überhitzten Dampf angeordnet sind;
(e) Expandieren des überhitzten Dampfes in einer Hochdruck-Dampfturbine (36) zur Erzeugung von Energie,
(f) Anzapfung eines ersten Teils von Dampf aus der Hochdruck-Dampfturbine (36) zum Vorwärmen des Speisewassers,
(g) Befördern eines zweiten Teils von Dampf aus der Hochdruck-Dampfturbine auf Zwischenüberhitzerheizflächen, die im Abgaskanal zur Erzeugung von zwischen-überhitztem Dampf angeordnet sind; und
(h) Expandieren des zwischenüberhitzten Dampfes in einer Mitteldruck-Dampfturbine (46) zur Erzeugung von Energie,
worin unter ersten Betriebsverhältnissen das Oxidationsgas eine Mischung aus im Wesentlichen reinem Sauerstoff und rezirkuliertem Abgas ist, **dadurch gekennzeichnet, dass** das Verhältnis des ersten und zweiten Teils von Dampf kontrolliert wird, um eine gewünschte Rauchgastemperatur im Abgaskanal stromabwärts vom End-Economiser zu erhalten.

2. Verfahren nach Patentanspruch 1, **dadurch gekennzeichnet, dass** die Brennstoff-Aufgaberate und die Speisewasser-Förderrate derart eingestellt werden, dass eine gewünschte Brennraumtemperatur erhalten wird.

3. Verfahren nach Patentanspruch 2, **dadurch gekennzeichnet, dass** unter zweiten Betriebsverhältnissen das Oxidationsgas Luft ist und beim Betreiben des Verbrennungssystems bei Volllast in den ersten und zweiten Betriebsverhältnissen die Brennstoff-Aufgaberate in den ersten Betriebsverhältnissen höher als die in den zweiten Betriebsverhältnissen ist.

4. Verfahren nach Patentanspruch 3, **dadurch gekennzeichnet, dass** beim Betreiben des Verbrennungssystems bei Volllast der ersten und zweiten Betriebsverhältnisse der erste Teil von Dampf in den ersten Betriebsverhältnissen weniger als der in den zweiten Betriebsverhältnissen ist, und der zweite Teil des Dampfes in den ersten Betriebsverhältnissen größer als der in den zweiten Betriebsverhältnissen ist.

5. Verfahren nach Patentanspruch 3, **dadurch gekennzeichnet, dass** das System - einen Gas-Gas-Wärmetauscher (60) umfasst und Wärme im Gas-Gas-Wärmetauscher in den ersten und zweiten Betriebsverhältnissen aus dem Abgas im Abgaskanal auf zumindest einen Teil des Oxidationsgases übertragen wird.

6. Verfahren nach Patentanspruch 1, **dadurch gekennzeichnet, dass** das Kontrollieren die Messung der Abgastemperatur (58) umfasst.

7. Verfahren nach Patentanspruch 3, **dadurch gekennzeichnet, dass** die Speisewasser-Förderrate in den ersten Betriebsverhältnissen größer als die in den zweiten Betriebsverhältnissen ist.

8. Verfahren nach Patentanspruch 1, **dadurch gekennzeichnet, dass** das Verfahren in den ersten Betriebsverhältnissen einen weiteren Schritt zur Druckbeaufschlagung eines Teils des Abgases in mehreren Abgaskompressoren umfasst, um flüssiges oder superkritisches Kohlendioxid zu produzieren.

9. Verfahren nach Patentanspruch 1, **dadurch gekennzeichnet, dass** das Verfahren in den ersten Betriebsverhältnissen einen weiteren Schritt zur Anzapfung eines Teils von Dampf (48) aus der Mitteldruck-Dampfturbine (46) für den Antrieb eines Kompressors umfasst.

10. Kesselsystem (10) zur Erzeugung von Energie durch Verbrennung von kohlenstoffhaltigem Brennstoff in einem Brennraum (14) des Kesselsystems, welches Kesselsystem umfasst:
Mittel fürs Aufgeben von kohlenstoffhaltigem Brennstoff (16) in den Brennraum;
Mittel fürs Aufgeben von im Wesentlichen reinem Sauerstoff und rezirkuliertem Abgas (18) als Oxidationsgas in den Brennraum zur Verbrennung des Brennstoffes,
um Abgas zu produzieren;
einen Abgaskanal (20) zur Ableitung des Abgases aus dem Brennraum;
Mittel zur Beförderung eines Stroms von Speisewasser von einem im Abgaskanal angeordneten End-Economiser (54) auf evaporierende (32) und überhitzende (34) Wärmetauschflächen, die in dem Brennraum und im Abgaskanal angeordnet sind,
zur Umwandlung des Speisewassers in überhitzten Dampf;
eine Hochdruck-Dampfturbine (36) zum Expandieren des überhitzten Dampfes zur Erzeugung von Energie,
Mittel zur Anzapfung eines ersten Teils von Dampf aus der Hochdruck-Dampfturbine fürs Vorwärmen von Speisewasser;
Mittel zur Beförderung eines zweiten Teils von Dampf aus der Hochdruck-Dampfturbine auf Zwischenüberhitzerheizflächen, die im Abgaskanal angeordnet sind, um zwischenüberhitzten Dampf zu erzeugen; und
eine Mitteldruck-Dampfturbine (46) zum Expandieren des zwischenüberhitzten Dampfes zur Erzeugung von Energie, **dadurch gekennzeichnet, dass** das Kesselsystem umfasst
Mittel zur Regelung des Verhältnisses des ersten und zweiten Teils von Dampf (56), um eine erwünschte Rauchgastemperatur stromabwärts im Abgaskanal vom End-Economiser zu erhalten.

11. Kesselsystem nach Patentanspruch 10, **dadurch gekennzeichnet, dass** das Kesselsystem Mittel zur Zuführung von Luft (62) als Oxidationsgas in den Brennraum zur Verbrennung des Brennstoffes umfasst, um Abgas zu produzieren.

12. Kesselsystem nach Patentanspruch 10, **dadurch gekennzeichnet, dass** das Kesselsystem einen Gas-Gas-Erhitzer-Wärmetauscher (60) zur Übertragung von Wärme aus dem Abgas im Abgaskanal auf zumindest einen Teil des Oxidationsgases umfasst.

13. Kesselsystem nach Patentanspruch 10, **dadurch gekennzeichnet, dass** die Mittel fürs Kontrollieren Mittel zur Messung der Abgastemperatur (58) umfassen.

14. Kesselsystem nach Patentanspruch 10, **dadurch gekennzeichnet, dass** das Kesselsystem mehrere Abgaskompressoren zur Druckbeaufschlagung eines Teils des Abgases umfasst, um flüssiges oder superkritisches Kohlendioxid zu produzieren.

15. Kesselsystem nach Patentanspruch 10; **dadurch gekennzeichnet, dass** das Kesselsystem Mittel zur Anzapfung eines Teils von Dampf (48) aus der Mitteldruck-Dampfturbine (46) zum Antreiben eines Kompressors umfasst.

## Revendications

1. Procédé de génération d'énergie par la combustion d'un combustible carboné avec un gaz oxydant dans un four (14) d'un système de chaudière (10), le procédé comprenant les étapes comprenant le fait de :
a) alimenter en combustible carboné (16) le four à une certaine vitesse d'alimentation en combustible ;
b) alimenter en gaz oxydant (18) le four pour faire brûler le combustible afin de produire des gaz de combustion ;
c) évacuer du four les gaz de combustion au moyen d'une canalisation d'évacuation des gaz de combustion (20) ;
d) acheminer un courant d'eau d'alimentation à une certaine vitesse de transport d'eau d'alimentation à partir d'un économiseur final (54) disposé dans la canalisation d'évacuation des gaz de combustion vers des surfaces d'échange thermique d'évaporation (32) et de surchauffe (34) agencées dans le four et dans la canalisation d'évacuation des gaz de combustion dans le but de transformer l'eau d'alimentation en vapeur surchauffée ;
e) dilater la vapeur surchauffée dans une turbine à vapeur sous haute pression (36) en vue de générer de l'énergie ;
f) extraire une première portion de la vapeur de la turbine à vapeur sous haute pression pour préchauffer l'eau d'alimentation ;
g) acheminer une seconde portion de la vapeur de la turbine à vapeur sous haute pression pour réchauffer les surfaces d'échange thermique disposées dans la canalisation d'évacuation des gaz de combustion afin de générer de la vapeur réchauffée ; et
h) dilater la vapeur réchauffée dans une turbine à vapeur sous pression intermédiaire (46) pour générer de l'énergie,
dans lequel, dans les premières conditions de fonctionnement, le gaz oxydant est un mélange d'oxygène essentiellement pur et de gaz de combustion recyclés, **caractérisé en ce que** le rapport entre la première et la seconde portion de vapeur est contrôlé de façon à obtenir une température souhaitée des gaz brulés dans la canalisation d'évacuation des gaz de combustion en aval de l'économiseur final.

2. Procédé selon la revendication 1, **caractérisé en ce que** la vitesse d'alimentation en combustible et la vitesse d'acheminement de l'eau d'alimentation sont ajustées de façon à obtenir une température de four souhaitée.

3. Procédé selon la revendication 2, **caractérisé en ce que**, dans les secondes conditions de fonctionnement, le gaz oxydant est de l'air et, lors du fonctionnement du système de combustion à pleine charge dans les premières et secondes conditions de fonctionnement, la vitesse d'alimentation en combustible est, dans les première conditions de fonctionnement, plus grande que dans les secondes conditions de fonctionnement.

4. Procédé selon la revendication 3, **caractérisé en ce que**, lors du fonctionnement du système de combustion à pleine charge dans les premières et secondes conditions de fonctionnement, la première portion de vapeur dans les premières conditions de fonctionnement est moins grande que dans les secondes conditions de fonctionnement, et la seconde portion de vapeur est, dans les premières conditions de fonctionnement, plus grande que celle des secondes conditions de fonctionnement.

5. Procédé selon la revendication 3, **caractérisé en ce que** le système comporte un échangeur thermique gaz - gaz (60) et **en ce que** la chaleur est transférée dans l'échangeur thermique gaz - gaz, dans les premières et secondes conditions de fonctionnement, du gaz de combustion se trouvant dans la canalisation d'évacuation des gaz de combustion vers une partie au moins du gaz oxydant.

6. Procédé selon la revendication 1, **caractérisé en ce que** le dispositif de contrôle comprend la mesure de la température des gaz de combustion (58).

7. Procédé selon la revendication 3, **caractérisé en ce que** la vitesse d'acheminement de l'eau d'alimentation est plus grande dans les premières conditions de fonctionnement que dans les secondes conditions de fonctionnement.

8. Procédé selon la revendication 1, **caractérisé en ce que** le procédé comprend, dans les premières conditions de fonctionnement, une étape supplémentaire consistant à pressuriser une partie des gaz de combustion dans de multiples compresseurs de gaz de combustion de façon à produire du dioxyde de carbone liquide ou supercritique.

9. Procédé selon la revendication 1, **caractérisé en ce que** le procédé comprend, dans les premières conditions de fonctionnement, une étape supplémentaire consistant à extraire une partie de la vapeur (48) de la turbine à vapeur sous pression intermédiaire (46) pour faire fonctionner un compresseur.

10. Système de chaudière (10) pour générer de l'énergie à l'aide de la combustion d'un combustible carboné dans un four (14) du système de chaudière, le système de chaudière comportant :
des moyens permettant d'alimenter le four en combustible carboné (16)
des moyens permettant d'alimenter le four en oxygène essentiellement pur et en gaz de combustion recyclés (18) en tant que gaz oxydant en vue de faire brûler le combustible afin de produire des gaz de combustion ;
une canalisation d'évacuation des gaz de combustion (20) pour évacuer du four les gaz de combustion ;
des moyens pour acheminer un courant d'eau d'alimentation à partir d'un économiseur final (54) disposé dans la canalisation d'évacuation des gaz de combustion vers des surfaces d'échange thermique d'évaporation (32) et de surchauffe (34) disposées dans le four et dans la canalisation d'évacuation des gaz de combustion en vue de transformer l'eau d'alimentation en vapeur surchauffée ;
une turbine à vapeur sous haute pression (36) pour dilater la vapeur surchauffée en vue de générer de l'énergie ;
des moyens pour extraire une première portion de vapeur à partir de la turbine à vapeur sous haute pression en vue d'un préchauffage de l'eau d'alimentation ;
des moyens pour acheminer une seconde portion de vapeur venant de la turbine à vapeur sous haute pression en vue du réchauffement des surfaces d'échange thermique disposées dans la canalisation d'évacuation des gaz de combustion afin de générer de la vapeur réchauffée ; et
une turbine à vapeur sous pression intermédiaire (46) pour dilater la vapeur réchauffée en vue de générer de l'énergie, **caractérisé en ce que** le système de chaudière comprend
des moyens pour contrôler le rapport entre la première portion et la seconde portion de vapeur (56) de façon à obtenir une température souhaitée des gaz brûlés dans la canalisation d'évacuation des gaz de combustion en aval de l'économiseur final.

11. Système de chaudière selon la revendication 10, **caractérisé en ce que** le système de chaudière comprend des moyens pour fournir de l'air (62) en tant que gaz oxydant dans le four en vue de faire brûler le combustible afin de produire des gaz de combustion.

12. Système de chaudière selon la revendication 10, **caractérisé en ce que** le système de chaudière comporte un échangeur de chaleur gaz - gaz (60) permettant de transférer la chaleur provenant des gaz de combustion dans la canalisation d'évacuation des gaz de combustion vers une partie au moins du gaz oxydant.

13. Système de chaudière selon la revendication 10, **caractérisé en ce que** les moyens destinés au contrôle comportent des moyens permettant de mesurer la température des gaz de combustion (58).

14. Système de chaudière selon la revendication 10, **caractérisé en ce que** le système de chaudière comprend de multiples compresseurs des gaz de combustion pour pressuriser une partie des gaz de combustion de façon à produire du dioxyde de carbone liquide ou supercritique.

15. Système de chaudière selon la revendication 10, **caractérisé en ce que** le système de chaudière comporte des moyens permettant d'extraire une portion de vapeur (48) de la turbine à vapeur sous pression intermédiaire (46) pour faire fonctionner un compresseur.
